# EUROPEAN PATENT APPLICATION

(11) **EP 1 475 737 A2**
(43) Date of publication of application: **10.11.2004**
(21) Application number: 03292982.0
(22) Date of filing: 28.11.2003
(51) Int. Cl.: G06K 7/00, G06K 19/077

(54) **Radio receiving system**

(30) Priority: 07.05.2003 EP 03291093
(71) Applicant: Axalto S.A., 92120 Montrouge (FR)
(72) Inventor: Leroy, Pascal, Schlumberger Systèmes, 92120 Montrouge (FR); Leibenguth, Joseph, Schlumberger Systèmes, 92120 Montrouge (FR); Roussel, François, Schlumberger Systèmes, 92120 Montrouge (FR)

(57) **Abrégé**

Un système de réception radio comprenant un lecteur et une carte à puce arrangée pour communiquer avec le lecteur. Le système comprend un récepteur radio apte à recevoir une pluralité de flux de données à partir d'un signal radio. La carte à puce comprend une zone de stockage de données. La zone de stockage de données comprend une donnée prédéfinie identifiant un flux de données particulier. Le système comprend en outre des moyens de sélection pour sélectionner parmi la pluralité de flux de données, le flux de donnée particulier identifié par la donnée prédéfinie.

## Description

La présente invention concerne un système de réception radio comprenant un récepteur radio apte à recevoir une pluralité de flux de données à partir d'un signal radio. Le système de réception peut être, par exemple, un objet portable de type carte à puce arrangée pour communiquer avec un lecteur. Le système de réception peut être, aussi un objet portable de type carte à puce.

Un problème que se pose l'invention est de restreindre le public ayant accès à des données radiodiffusées.

Selon un aspect de l'invention un système de réception radio comprenant un lecteur et une carte à puce arrangée pour communiquer avec le lecteur, le système comprenant un récepteur radio apte à recevoir une pluralité de flux de données à partir d'un signal radio, la carte à puce comprenant une zone de stockage de données, est caractérisé en ce que la zone de stockage de données comprend une donnée prédéfinie identifiant un flux de données particulier, le système comprenant en outre des moyens de sélection pour sélectionner parmi la pluralité de flux de données, le flux de données particulier identifié par la donnée prédéfinie.

La donnée prédéfinie définie, par exemple, une certaine fréquence. Le flux de données particulier est, par exemple, un programme radiodiffusé sur la fréquence en question. Lorsque la carte à puce communique avec le lecteur, les moyens de sélections vont sélectionner le flux de données particulier relatif au programme radiodiffusé en utilisant la donnée prédéfinie. Ainsi pour sélectionner le programme radiodiffusé, il est nécessaire de posséder la carte à puce. Le public ayant accès au programme radiodiffusé est donc restreint.
La figure 1 illustre un mode de réalisation du système de réception radio selon l'invention ; et
La figure 2 illustre un deuxième mode de réalisation du système de réception radio selon l'invention.

Afin de mieux comprendre l'invention, voici trois exemples de mises en oeuvre.

### Exemple 1

A partir du produit récepteur de radio FM de poche low cost associée à une carte à puce décrit dans la demande de brevet européenne 03291093.7, le présent exemple prévoit une extension des fonctionnalités de ce récepteur à la gamme de fréquences AM commerciale (520Khz- 1650 Khz) et FM étendue (10 Mhz à 87.5 Mhz et au-delà de 108 Mhz). Le produit récepteur radio encore appelé lecteur peut soit être spécialisé dans une plage de fréquence donnée ou bien grâce à des composants radio plus élaborés et une électronique de filtrage adaptée, il peut comporter plusieurs gammes de fréquences.
La carte à puce associée, au-delà de la gestion de ou des fréquences fixes, assure aussi la gestion de la durée de fonctionnement du lecteur et introduit la notion de PayRadio.
Profitant de son interface carte à puce, le connecteur SCOR peut aussi en option permettre la lecture du solde de porte-monnaie et par l'addition d'un écran LCD son affichage.

SCOR = Smard Card Operated Radio = produit complet
RadioCarte = carte à puce permettant la sélection d'une fréquence particulière sur un récepteur de radio FM/AM ou autres gammes de fréquence.
EasyReader = connecteur/lecteur incorporant totalement ou partiellement l'électronique radio et qui est couplé à une carte à puce pour former une kit « SCOR = Smart Card Operated Radio ».

Extension des fonctionnalités du produit SCOR aux gammes de fréquences autres que FM commerciale et plus précisément aux gammes AM commerciales (520 - 1650 Khz) et aux plages de fréquence FM 10 - 87.5 Mhz et au-delà de 108 Mhz.

Extension de la fonctionnalités de la cartes RadioCarte au-delà du blocage du lecteur sur sa fréquence ou ses fréquences fixes pour lui demander de gérer la durée du fonctionnement du lecteur. Cette gestion de durée se fait simplement par décompte des unités prédéfinies pendant la personnalisation de la carte.

Possibilité d'inclure dans le connecteur un écran LCD ou équivalent gérer par un composant supplémentaire. Cet écran pourra afficher la fréquence de la radio et au-travers du microprocesseur assurant l'interface avec la carte à puce le solde de la RadioCarte ou d'un porte monnaie électronique.

Au-delà des radios traditionnelles qui permettent d'écouter la FM et l'AM commerciale, le produit SCOR tel que décrit dans la demande de brevet 03291093.7 permet d'utiliser les sous-porteuses et par conséquent offre déjà une possibilité de limiter l'écoute aux quasi seul porteur du produit SCOR.

L'extension aux gammes de fréquence AM et FM étendue offrent des possibilités supplémentaires pour des émissions audio déjà diffusées sur ces gammes de fréquence ou bien apporte une réponse à la saturation de la bande FM.

L'utilisation du lecteur EasyReader pour l'affichage du solde des unités de la radiocarte ou d'un porte-monnaie électronique est possible grâce à l'interface carte à puce présente dans l'EasyReader. Aucune autre radio n'est capable d'offrir ce service.

Un problème que se propose de résoudre l'invention est de garantir la « captivité » d'un public sur un programme radiodiffusé donné, sans manipulation, par verrouillage de la fréquence et/ou de la sous porteuse, sans qu'il puisse basculer sur une autre fréquence.

Un problème que se propose de résoudre l'invention est de permettre l'utilisation de fréquence AM et FM étendue pour réduire les chances d'utilisation d'une radio normale. Aussi permettre à l'organisateur d'événement de trouver une fréquence alors que la FM est saturée dans les grandes villes.

Un problème que se propose de résoudre l'invention est de mettre à disposition des radiodiffuseurs et annonceurs, l'utilisation d'un éventail plus large de fréquences, (par rapport à celui saturé en radiodiffusion FM publique) en diffusant sur des bandes de fréquences différentes et/ou sous-porteuses tout en fournissant le récepteur radio adapté.

Un problème que se propose de résoudre l'invention est de permettre optionnellement d'afficher des unités ou les données de la RadioCarte ou plus généralement de toute carte à puce possédant par exemple un porte monnaie électronique.

Un problème que se propose de résoudre l'invention est d'avoir la possibilité de réserver l'exclusivité d'écoute au réel public payant de l'évènement sans communiquer la fréquence publiquement.

Un problème que se propose de résoudre l'invention est de gérer au travers de la carte la durée de la réception. Ceci par décompte des unités par exemple.

La combinaison d'un connecteur et d'une carte à puce « RadioCarte » permet en intégrant un ou plusieurs circuits intégrés de décodage FM / AM dans l'un ou l'autre des éléments, de satisfaire l'ensemble des contraintes à un coût abordable.

### Description du produit :

Le système récepteur FM/AM de poche « RadioCarte » se décompose en 2 parties :
- un connecteur
- une RadioCarte
Il peut prendre 2 formes, nommées ci dessous SCOR 1 et SCOR 2.

### 1. Concept SCOR1 (concept All-In-One)

Dans ce concept, la partie radio active (décodage HF, FM de 10 à 108MHz et au-delà, AM de 520 à 1650 Khz) est intégrée dans la RadioCarte.
Le connecteur intègre uniquement :
- l'alimentation (2 piles LR03) pour le module radio de la RadioCarte,
- la connection de l'écouteur mono auriculaire et de l'antenne intégrée dans le fil d'écouteur.
- une petite amplification audio à 2 niveaux « high » ou « low » sélectionnables par le spectateur pour une utilisation possible du système dans un environnement bruyant (type circuit automobile ou moto).

Le connecteur SCOR1 est conçu pour être récupéré et recyclé facilement après usure et fin de vie des piles. Le connecteur peut être considéré comme consommable bas coût.

Fonctionnement :
- l'insertion de la RadioCarte dans le connecteur alimente électriquement la RadioCarte.
- le module actif de décodage (10 MHz à 108Mhz et/ou 520 - 1650 Khz) se cale sur la gamme de fréquence, la (les) fréquence(s), et la sous-porteuse (éventuellement) en fonction du contenu du chip mémoire du module RadioCarte. Ce chip mémoire est intégré dans le module radio actif. Il reprend la position des contacts normalisés dans la norme ISO 7810, pour permettre une programmation électrique avec les outils standards.
- En cas d'absence de signal sur la première fréquence sélectionnée, le système bascule sur la 2eme fréquence mémorisée dans le chip. Cette fréquence peut être la fréquence permanente du sponsor radiodiffuseur de l'évènement.
- En fin d'évènement, le spectateur peut garder la RadioCarte à titre de collector et/ou s'en servir comme récepteur radio FM dédiée.
- La liaison fil d'écouteur / connecteur est non séparable, pour gagner en fiabilité et en coût

### 2. Concept SCOR2

La RadioCarte comprend uniquement un chip stockant les informations codées de gamme, fréquence nominale, numéro de sous porteuse et durée d'activation max éventuellement. Elle devient une carte équivalente au type « prepaid » de bas coût comme la TeleCarte téléphonique.
Le connecteur est un récepteur radio FM complet, multigammes, à sélection exacte de fréquence et/ou des sous porteuses associées.
Il intègre aussi :
- l'alimentation par 2 piles LR03
- l'amplification audio pour l'écouteur mono auriculaire
- l'antenne intégrée dans le fil d'écouteur.
- Une petite amplification audio à 2 niveaux de volumes (pour écoute possible en milieu bruyant, type circuit automobile)
- Un µcontroller pour l'interface avec le chip de la RadioCarte (lecture des informations dans le chip).

La RadioCarte est donc jetable ou consommable, ou gardée en tant que collector après fin de l'événement
Le récepteur radio est universel et durable avec la possibilité de changement aisé des piles ou batteries, ainsi que la possibilité pour l'utilisateur de choisir l'écouteur qui lui convient le mieux (connexion de l'écouteur par jack 3.5 normalisé)

### Personnalisation graphique des 2 parties :

### Connecteur :

la forme du connecteur peut être personnalisée en fonction de l'événement ou du souhait du sponsor ou partenaire de l'événement, pour mieux marquer son identité:

### Personalisation de la RadioCarte :

Exemple de personnalisation de la RadioCarte aux couleurs d'un sponsor (pour information seulement, les marques affichées sont propriétés des sociétés de même nom) :

### Avantages:

Création d'un récepteur radio FM/AM en 2 parties :
- une partie consommable, jetable (ou collector) et personnalisable à un événement, annonceur, ou autre : la RadioCarte, pour sélectionner la ou les fréquences d'utilisation
- un connecteur d'alimentation (et radio selon le type) réutilisable, recyclable, universel.

Création d'un récepteur radio FM/AM dédié sur 1 ou plusieurs fréquences fixes, sans manipulation ou recherche pour l'utilisateur.

Etablir un nouveau media de communication sur un public captif réunissant 3 moyens de communications :
- la personnalisation graphique de la RadioCarte (impression d'un logo, d'un message publicitaire...)
- la personnalisation graphique du connecteur (forme adaptée à l'événement, couleur, impression, dépot d'étiquette - en lieu et place du nom Schlumberger qui apparaît sur les vues ci-dessus)
- la personnalisation électrique du chip bloquant la fréquence et/ou la sous-porteuse de réception du système sur le programme souhaité.

Utilisation du format carte à puce normalisée (ISO7810) pour bénéficier des technologies et de la flexibilité de fabrication des cartes à puces :
- impression
- miniaturisation électronique profitant au connecteur
- personnalisation électrique du chip (protocole ISO 7816)

Utilisation du format carte à puce normalisée pour intégrer les fonctions supplémentaires normalisées dans la RadioCarte :
- porte-monnaie électronique, pour l'achat de biens ou services sur le lieu de l'événement par le spectateur
- badge d'accès sans contact pour accès sécurisé à l'événement, avec activation à l'entrée de fonctions :
   ■ par exemple, activation à l'entrée de l'événement de la fréquence de réception radio souhaitée et désactivation en sortie

Fréquence de réception non divulguée (codée dans le chip) et directement accessible aux seuls possesseurs de la RadioCarte, en particulier aux spectateurs de l'événement. Le programme radiodiffusé peut donc comporter des informations à valeur ajoutée pour le public de l'événement.

Elargissement du nombre de fréquences de radiodiffusion par la mise à disposition sur le marché d'un récepteur radio capable de sélectionner les différentes sous-porteuses d'un signal.

Récepteur radio capable de basculer automatiquement d'une fréquence à une autre :

### Exemple :

- un organisme de radiodiffusion sponsorise un événement. Il utilise une sous-porteuse de son signal pour diffuser le programme de l'événement à destination des spectateurs. A la fin de l'événement (signal de sous porteuse absente ou détection d'un codage particulier), le récepteur bascule automatiquement sur la fréquence principale de l'organisme de radiodiffusion.
- ou réception d'une fréquence particulière au sein de l'événement (ex. microphone sans fil) et basculement sur un programme général ensuite.

### Exemple 2 :

Cet exemple 2 complète la demande de brevet européen 03291093.7.
Il décrit l'extension des fonctionnalités à la réception de données audio, vidéo ou data numérique, leur écoute audio et éventuellement leur enregistrement dans une mémoire de masse, ainsi que le transfert de ces données vers un ordinateur. Les données transmissent over the air par fréquence radio peuvent être codées ou pas. Dans le cas de données codées, la carte à puce associée assure le décryptage en ligne pour une écoute en clair. Les données stockées dans la mémoire de masse peuvent l'être en clair ou codé suivant les exigences du diffuseur.

A partir du produit récepteur de radio FM de poche low cost associée à une carte à puce décrit dans la demande de brevet 03291093.7, le présent exemple prévoit une extension des fonctionnalités dans le domaine numérique. Au-delà des fonctions audio de base, le produit SCOR pourra servir de stockage de masse des données RF et de leur transfert plus tard vers un ordinateur. L'inverse étant aussi possible en permettant au produit Scor de devenir un lecteur MP3.

La présence de la Radiocarte avec ses fonctionnalités carte à puce permettra de garantir par l'utilisation d'un composant cryptographique, par exemple, de décrypter les données en ligne et de les écouter au travers du circuit audio en clair. En cas de stockage sur une mémoire de masse, la même RadioCarte assure la confidentialités des informations vers la mémoire des masses et le respect des droits d'auteur. Aussi cette même carte pourra assurer le lien vers le PC par l'utilisation du protocole USB.

Extension des fonctionnalités du produit SCOR au monde du numérique. Le produit SCOR comprend, par exemple, les fonctions suivantes :
- décryptage des données au travers d'une carte à puce crytographique
- vérification et paiement des droits d'auteurs
- enregistrement sous forme codé ou clair (en fonction des demandes du diffuseur) des données sur une mémoire de masse entièrement contrôlée par la smart card.
- Transfert des données par bus USB vers un PC, toujours sous le contrôle de la smart card
- Gestion des droits de l'utilisateur du produit SCOR
- Gestion de la durée de fonctionnement lors d'un événement
- Enregistrement de données média métrique si demandé et exploité sur borne séparée (ces données pourront être enregistrées sur la smart card et relue sur une borne spécifique. Des points de fidélités pourront être attribués au porteur du produit SCOR)
- Copie depuis un PC de données audio ou autre et ré-écoute des données audio par le système audio de SCOR.

Le numérique dans la radio est en phase de démarrage et le produit SCOR s'adaptera aisément à cette nouvelle fonctionnalité pour offrir des avantages particuliers par rapport aux autres systèmes. En effet, la radio traditionnelle numérique s'intéresse avant tout à la qualité d'écoute et à la disponibilité des fréquences. Elle n'est pas outillée pour sécuriser les droits d'auteur ou pour assurer le stockage de données pour une ré-exploitation ultérieure.

Les premières radios numériques jouent avant tout la qualité d'écoute.

Les problèmes à résoudre sont :
- décrypter les données,
- enregistrer les données pour une exploitation ultérieure,
- transférer les données sur un ordinateur
- assurer le paiement des droits d'auteur
- donner la possibilité de présélectionner des émissions et les enregistrer automatiquement ou à la demande comme pour un magnétoscope
- donner la possibilité de ré-écouter une émission enregistrée
- donner la possibilité de downloder d'un ordinateur un fichier type MP3 pour une écoute différée
- possibilité de décryptage en ligne (on the fly) ou en différé (mode batch).

La combinaison d'un connecteur « EasyReader » et d'une carte à puce « RadioCarte » permet en intégrant un ou plusieurs circuits intégrés de décodage numérique dans l'un ou l'autre des éléments, de satisfaire l'ensemble des contraintes à un coût abordable.

### Description du produit :

Le système récepteur FM/AM de poche « RadioCarte » se décompose en 2 parties :
- un connecteur appelé EasyReader
- une RadioCarte

### Fonctionnenment :

L'insertion de la RadioCarte dans le connecteur alimente électriquement la RadioCarte.
Le module actif de décodage se cale sur la gamme de fréquence, la (les) fréquence(s), et la sous-porteuse (éventuellement) en fonction du contenu du chip du module RadioCarte.
Le connecteur est un récepteur radio numérique complet, multigammes, à sélection exacte de fréquence et/ou des sous porteuses associées.
Il intègre aussi :
- l'alimentation par 2 piles LR03
- l'amplification audio pour l'écouteur mono auriculaire
- l'antenne intégrée dans le fil d'écouteur.
- Une petite amplification audio
- Un µcontroller pour l'interface avec le chip de la RadioCarte (lecture des informations dans le chip).

La RadioCarte assurant le décryptage des données et la validation des droits, peut aussi associé au microprocesseur principal une mémoire de masse type flash pour le stockage des données.
Le récepteur radio est universel et durable avec la possibilité de changement aisé des piles ou batteries, ainsi que la possibilité pour l'utilisateur de choisir l'écouteur qui lui convient le mieux (connection de l'écouteur par jack 3.5 normalisé). Il est possible de le compléter de mémoire de masse type flash pour le stockage de données soit directement soit au travers de la RadioCarte.
Afin des communiquer avec un PC, une connection USB est ajoutée au connecteur EasyReader.

### Avantages :

Création d'un récepteur radio numérique en 2 parties :
- une partie carte à puce personnalisable à un événement, annonceur, ou autre : la RadioCarte, pour sélectionner la ou les fréquences d'utilisation et assurer les droits (radio à péage, droit d'auteur...)
- un connecteur d'alimentation (et radio selon le type) réutilisable, recyclable, universel.

Création d'un récepteur radio numérique dédié sur 1 ou plusieurs fréquences fixes, sans manipulation ou recherche pour l'utilisateur.

Etablir un nouveau média de communication sur un public captif réunissant 3 moyens de communications :
- la personnalisation graphique de la RadioCarte (impression d'un logo, d'un message publicitaire...)
- la personnalisation graphique du connecteur EasyReader (forme adaptée à l'événement, couleur, impression, dépôt d'étiquette
- en lieu et place du nom Schlumberger qui apparaît sur les vues ci-dessus)
- la personnalisation électrique du chip bloquant la fréquence et/ou la sous-porteuse de réception du système sur le programme souhaité et gérant les droits et le profil de l'utilisateur.

Utilisation du format carte à puce normalisée (ISO7810) pour bénéficier des technologies et de la flexibilité de fabrication des cartes à puces :
- impression
- miniaturisation électronique profitant au connecteur EasyReader
- personnalisation électrique du chip (protocole ISO 7816, protocole USB)

Utilisation du format carte à puce normalisée pour intégrer les fonctions supplémentaires normalisées dans la RadioCarte :
- porte-monnaie électronique, pour l'achat de biens ou services sur le lieu de l'événement par le spectateur
- badge d'accès sans contact pour accès sécurisé à l'événement, avec activation à l'entrée de fonctions :
- par exemple, activation à l'entrée de l'événement de la fréquence de réception radio souhaitée et désactivation en sortie
- mémoire de masse type flash accessible au travers d'un bus USB ou PSI.
- Gestion du profil de l'utilisateur et fonction médiamètrie

Fréquence de réception non divulguée (codée dans le chip) et directement accessible aux seuls possesseurs de la RadioCarte, en particulier aux spectateurs de l'événement. Le programme radiodiffusé peut donc comporter des informations à valeur ajoutée pour le public de l'événement.

Elargissement du nombre de fréquences de radiodiffusion par la mise à disposition sur le marché d'un récepteur radio capable de sélectionner les différentes sous-porteuses d'un signal.

Récepteur radio capable de basculer automatiquement d'une fréquence à une autre :

### Exemple :

- un organisme de radiodiffusion sponsorise un événement. Il utilise une sous-porteuse de son signal pour diffuser le programme de l'événement à destination des spectateurs. A la fin de l'événement (signal de sous porteuse absent ou détection d'un codage particulier), le récepteur bascule automatiquement sur la fréquence principale de l'organisme de radiodiffusion.
- ou réception d'une fréquence particulière au sein de l'événement (ex. microphone sans fil) et basculement sur un programme général ensuite.

Récepteur radio capable d'enregistrer automatiquement une émission prédéfinie :

### Exemple :

- un organisme de radiodiffusion transmet un cours de la Sorbonne animé par un éminent spécialiste. A la date et à l'heure définie et enregistrée dans la RadioCarte, le produit SCOR enregistre l'émission pour une utilisation ultérieure ou son transfert sur un ordinateur. Les données enregistrées peuvent être des données audios, vidéo ou autre. Seul les données audios seront directement exploitables avec le produit SCOR.

### Exemple 3

Cet exemple complète la demande de brevet européen 03291093.7. Il décrit l'extension des fonctionnalités en permettant le brouillage (scrambling) et le décodage de l'émission audio.

A partir du produit récepteur de radio FM de poche low cost associée à une carte à puce décrit dans la demande de brevet 03291093.7, le présent patent mémo prévoit une extension des fonctionnalités de ce récepteur aux décodage d'émissions brouillées. Sur le signal normal de l'émission est superposé un signal supplémentaire qu'il suffit de sous-traire pour obtenir le signal audio audible.

Extension des fonctionnalités du produit SCOR aux émissions brouillées. Le module de réception audio devra disposer pour cela d'une fonction soustractive qui permette de recalculer le signal non brouillé et rendre l'émission normalement audible.

La télévision à péage nous a habitué aux émissions codées en analogique ou en numérique. Dans le cas précis de la radio low cost SCOR, il s'agit d'appliquer des principes consistant à superposer au signal en clair un signal de brouillage qui perturbe les radios traditionnelles. Dans le cas de SCOR, il faut prévoir un filtre supplémentaire pour ramener le signale audible.

Un problème que se propose de résoudre l'invention est d'avoir la possibilité de réserver l'exclusivité d'écoute au réel public payant de l'événement en empêchant l'utilisation d'une radio normale.

La combinaison d'un connecteur et d'une carte à puce « RadioCarte » permet en intégrant un ou plusieurs circuits intégrés de décodage FM / AM dans l'un ou l'autre des éléments, de satisfaire l'ensemble des contraintes à un coût abordable. La mise en place d'un filtre supplémentaire neutralise le signal de brouillage.

### Avantages :

### Obliger le public à acheter SCOR au-lieu d'une radio low cost chinoise.

La description ci-dessus concerne un système de réception radio comprenant un lecteur et une carte à puce arrangée pour communiquer avec le lecteur. Le système comprend un récepteur radio apte à recevoir une pluralité de flux de données à partir d'un signal radio. La carte à puce comprend une zone de stockage de données. La zone de stockage de données comprend une donnée prédéfinie identifiant un flux de données particulier. Le système comprend en outre des moyens de sélection pour sélectionner parmi la pluralité de flux de données, le flux de donnée particulier identifié par la donnée prédéfinie.

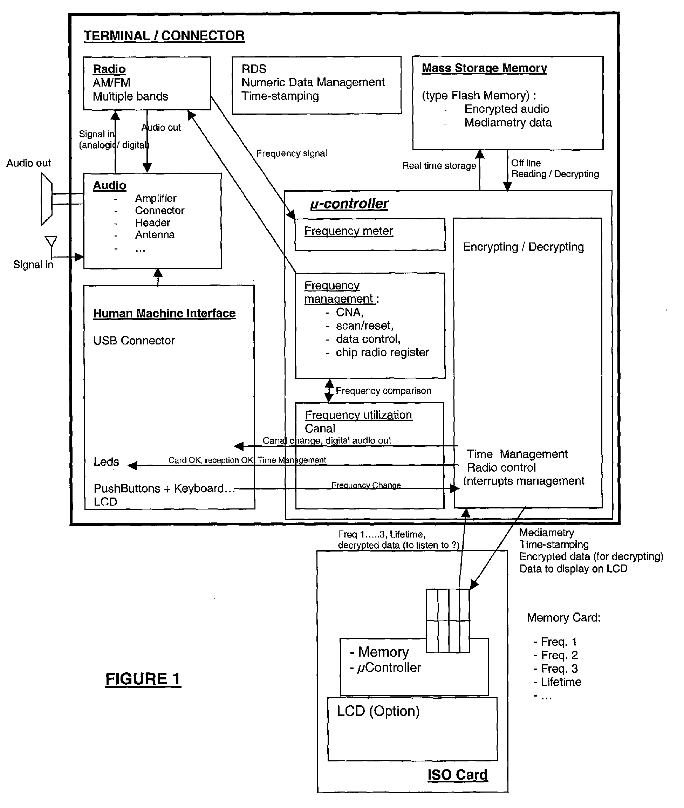

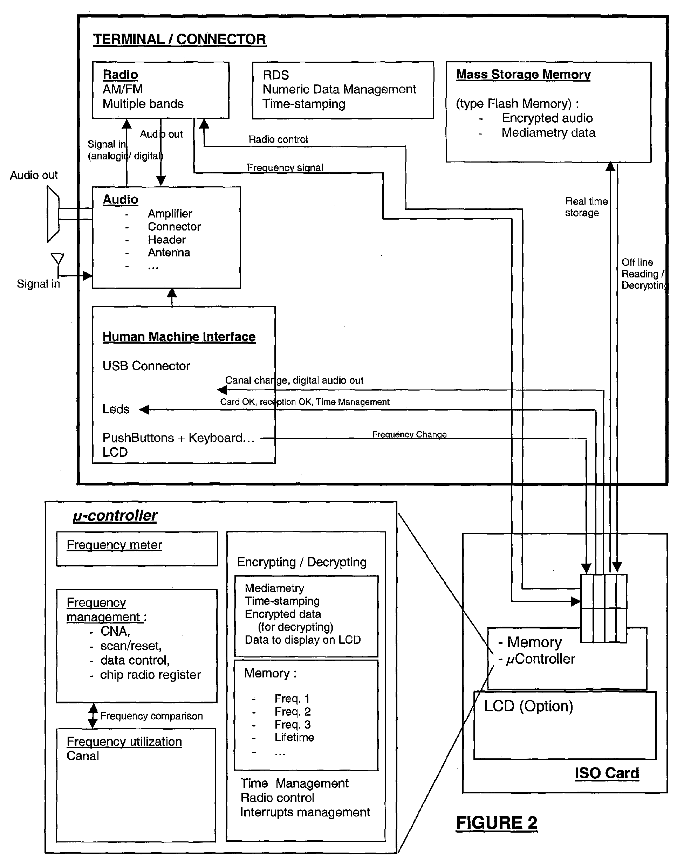

Selon un autre aspect de l'invention, comme illustré à la figure 1 et 2, la donnée prédéfinie définie une fréquence. Alternativement, la donnée prédéfinie pourrait définir un temps (multiplexage temporel).

Selon un autre aspect de l'invention, comme illustré à la figure 1 et 2, le système comprend des moyens de limitation pour faire fonctionner le récepteur radio pendant une durée limitée en utilisant une deuxième donnée prédéfinie, la deuxième donnée prédéfinie étant stockée dans la zone de stockage de données de la carte à puce.
Ainsi selon selon cette alternative, le possesseur de la carte peut écouter les données radiodiffusées uniquement pendant une durée limitée, par exemple, juste pendant la durée d'un événement sportif, par exemple, une course à la voile ou un match de tennis. Ceci permet donc avantageusement de restreindre dans le temps le public ayant accès aux données radiodiffusées.

Selon un autre aspect de l'invention, comme illustré à la figure 2, la carte à puce comprend des moyens de décryptage apte à décrypter un flux de données du signal radio.
Ainsi selon cette alternative, les données radiodiffusées sont cryptées et sont décryptable uniquement pour le possesseur de la carte. Ainsi même si un fraudeur arrivait à recevoir les données radiodiffusées sans utiliser la carte à puce, il pourrait plus difficilement les décrypter car il n'a pas la carte à puce. Ceci permet avantageusement de restreindre plus encore le public ayant accès aux données radiodiffusées.
De façon alternative, au lieu de crypter les données radiodiffusées, ces dernières peuvent être brouillées. L'utilisation du brouillage ou du cryptage peut dépendre du niveau de sécurité requis en fonction notamment du contenu des données radiodiffusées. L'utilisation du brouillage ou du cryptage peut aussi dépendre de la nature intrinsèque des données (données numérique ou analogique).

Selon un autre aspect de l'invention, comme illustré à la figure 1, le lecteur comprend des moyens de décryptage apte à décrypter un flux de données du signal radio.

Selon un autre aspect de l'invention, comme illustré à la figure 1 et 2, le système de réception radio comprend des moyens d'enregistrement dans une mémoire de masse d'un flux de données reçue par le signal radio, les moyens d'enregistrement étant aptes à se déclencher à partir d'une date définie par une troisième donnée prédéfinie, la troisième donnée prédéfinie étant stockée dans la zone de stockage de données de la carte à puce.
Ainsi, selon cette alternative, l'utilisateur peut avantageusement enregistrer à heure fixe, par exemple, son émission radio préférée, et la réécouter dès qu'il est disponible.

Selon un autre aspect de l'invention, le récepteur radio se trouve dans la carte.

Selon un autre aspect de l'invention, le récepteur radio se trouve dans le lecteur.

Selon un autre aspect de l'invention, comme illustré à la figure 2, les moyens de sélection se trouvent dans la carte.

Selon un autre aspect de l'invention, comme illustré à la figure 1, les moyens de sélection se trouvent dans le lecteur.

Selon un autre aspect de l'invention, un objet portable de type carte à puce comprend un récepteur radio apte à recevoir une pluralité de flux de données à partir d'un signal radio. L'objet portable comprend en outre une zone de stockage de données. La zone de stockage de données comprend une donnée prédéfinie identifiant un flux de données particulier. L'objet portable comprend en outre des moyens de sélection pour sélectionner parmi la pluralité de flux de données, le flux de donnée particulier identifié par la donnée prédéfinie.

Dans la description ci-dessus une carte à puce est utilisée. Son format standard permet avantageusement de mettre notamment de la publicité dessus. De façon générale on pourrait utiliser tout objet portable comprenant au moins une zonestockage de données et de façon avantageuse un microprocesseur.

## Revendications

1. Système de réception radio comprenant un lecteur et une carte à puce arrangée pour communiquer avec le lecteur, le système comprenant un récepteur radio apte à recevoir une pluralité de flux de données à partir d'un signal radio, la carte à puce comprenant une zone de stockage de données, le système étant **caractérisé en ce que** la zone de stockage de données comprend une donnée prédéfinie identifiant un flux de données particulier, le système comprenant en outre des moyens de sélection pour sélectionner parmi la pluralité de flux de données, le flux de donnée particulier identifié par la donnée prédéfinie.

2. Le système de réception radio selon la revendication 1, **caractérisé en ce que** la donnée prédéfinie définie une fréquence.

3. Le système de réception radio selon la revendication 1, **caractérisé en ce que** le système comprend des moyens de limitation pour faire fonctionner le récepteur radio pendant une durée limitée en utilisant une deuxième donnée prédéfinie, la deuxième donnée prédéfinie étant stockée dans la zone de stockage de données de la carte à puce.

4. Le système de réception radio selon la revendication 1, **caractérisé en ce que** la carte à puce comprend des moyens de décryptage apte à décrypter un flux de données du signal radio.

5. Le système de réception radio selon la revendication 1, **caractérisé en ce que** le système comprend des moyens d'enregistrement dans une mémoire de masse d'un flux de données reçue par le signal radio, les moyens d'enregistrement étant aptes à se déclencher à partir d'une date définie par une troisième donnée prédéfinie, la troisième donnée prédéfinie étant stockée dans la zone de stockage de données de la carte à puce.

6. Le système de réception radio selon la revendication 1, **caractérisé en ce que** le récepteur radio se trouve dans la carte.

7. Le système de réception radio selon la revendication 1, **caractérisé en ce que** le récepteur radio se trouve dans le lecteur.

8. Le système de réception radio selon la revendication 1, **caractérisé en ce que** les moyen de sélection se trouvent dans la carte.

9. Le système de réception radio selon la revendication 1, **caractérisé en ce que** les moyen de sélection se trouvent dans le lecteur.

10. Objet portable de type carte à puce, l'objet portable comprenant un récepteur radio apte à recevoir une pluralité de flux de données à partir d'un signal radio, l'objet portable comprenant en outre une zone de stockage de données, la zone de stockage de données comprenant une donnée prédéfinie identifiant un flux de données particulier, l'objet portable comprenant en outre des moyens de sélection pour sélectionner parmi la pluralité de flux de données, le flux de donnée particulier identifié par la donnée prédéfinie.
